# FASCICULE DE BREVET EUROPEEN

(11) **EP 2 452 329 B1**
(45) Date de publication et mention de la délivrance du brevet: **03.01.2018**
(21) Numéro de dépôt: 10742201.6
(22) Date de dépôt: 05.07.2010
(51) Int. Cl.: G09B 9/042

(54) **SIMULATEUR DE PARCOURS EN FAUTEUIL ROULANT**
FAHRSIMULATOR FÜR EINEN ROLLSTUHL
WHEELCHAIR TRAVEL SIMULATOR

(30) Priorité: 08.07.2009 FR 0954740
(43) Date de publication de la demande: 16.05.2012
(73) Titulaire: Electricité de France, 75008 Paris (FR); Arts, 75013 Paris (FR); Haption, 53210 Soulge-sur-Ouette (FR)
(72) Inventeur: SCHMID, Alain, F-78160 Marly Le Roi (FR); RICHIR, Simon, F-53970 L'Huisserie (FR); LOUVEAU, François, F-53000 Laval (FR)
(74) Mandataire: Cabinet Plasseraud
(86) Numéro de dépôt international: PCT/FR2010/051416
(87) Numéro de publication internationale: WO 2011/004114

(56) Documents cités:
- WO-A1-2005/075937
- US-A- 6 123 547
- US-A1- 2002 018 982

## Description

La présente invention concerne un appareil de simulation de parcours en fauteuil roulant.

La réalité virtuelle est une technologie qui a souvent été utilisée pour reproduire les conditions nécessaires à la conduite d'un moyen de transport tel que voiture, vélo, fauteuil roulant, etc.

Cela permet à un utilisateur d'interagir avec un environnement virtuel par l'intermédiaire d'une interface telle qu'un volant, guidon, roues, etc. qu'il a l'habitude d'utiliser ou qu'il sera amené à utiliser régulièrement.

Le document WO 2005/075937 décrit un appareil de simulation pour voiture qui comprend un calculateur, des moyens de visualisation et une plate-forme sur laquelle repose la voiture, qui sont agencés ensemble pour permettre de simuler les mouvements d'une voiture dans un parcours virtuel.

Dans le cas d'un simulateur de déplacement d'un fauteuil roulant, cela permet également aux décideurs et aménageurs (architectes, urbanistes, etc.) de se sensibiliser aux problèmes de déplacement des personnes handicapées et de vérifier que les installations prévues sont bien accessibles à celles-ci.

Classiquement, un simulateur comporte un système de visualisation offrant, en général, une vue subjective, c'est-à-dire que l'utilisateur voit le monde virtuel comme s'il était immergé dedans, les simulateurs les plus sophistiqués offrant la possibilité de visualisation 3D pour renforcer l'impression d'immersion.

Selon le degré de réalisme proposé par le simulateur, celui-ci peut recevoir des commandes de l'utilisateur via une interface classique de type clavier-souris ou bien par une connexion directe au fauteuil roulant. Par exemple, dans le cas des fauteuils roulants électriques se commandant grâce à un joystick, les ordres que ce dernier transmet normalement aux moteurs du fauteuil peuvent être captés et envoyés au simulateur pour être exécutés par le fauteuil roulant virtuel du simulateur.

Les simulateurs de fauteuil roulant les plus sophistiqués gèrent également la perception vestibulaire de l'utilisateur. Afin que le système vestibulaire humain puisse recevoir des informations provenant du simulateur, celui-ci comporte une plateforme mobile qui permet d'incliner l'utilisateur et son fauteuil en fonction de l'inclinaison des plans dans l'environnement virtuel.

En général les plateformes utilisées sont basées sur un modèle de plateforme de Stewart constituée de six vérins permettant de faire ressentir six degrés de liberté (trois translations et trois rotations).

Ces solutions ont pour inconvénient d'être coûteuse alors que la perception vestibulaire apparaît comme un paramètre important dans la qualité de l'apprentissage par utilisation d'un simulateur.

Il serait donc avantageux d'obtenir un simulateur capable de fournir des sensations vestibulaires aux utilisateurs à un coût raisonnable aussi bien pour la conception que pour l'entretien.

Il serait également souhaitable que ce simulateur soit accessible aisément aux fauteuils roulants et donc qu'il ait une hauteur maximale d'environ 25 centimètres, qu'il soit transportable facilement pour pouvoir être partagé par des associations, collectivités, etc. et qu'il soit modulaire et configurable pour s'adapter aux besoins et moyens des utilisateurs.

Pour résoudre un ou plusieurs des inconvénients cités précédemment, un appareil de simulation de parcours en fauteuil roulant comporte :
- un calculateur adapté pour simuler l'évolution d'un fauteuil roulant virtuel dans un environnement virtuel ;
- des moyens de visualisation adaptés pour visualiser ladite évolution ;
- des moyens de support d'un fauteuil roulant réel comportant
   ∘ des capteurs associés au fauteuil roulant réel adaptés pour transmettre au calculateur des informations d'ordres de déplacement du fauteuil roulant réel, le calculateur adaptant l'évolution du fauteuil roulant virtuel en fonction des informations d'ordres de déplacement reçues,
   ∘ des actionneurs adaptés pour déplacer en inclinaison les moyens de support en fonction d'ordres émis par le calculateur de telle sorte que l'inclinaison des moyens de support soit conforme à l'environnement d'évolution du fauteuil roulant virtuel.

En outre, les moyens de support comportent une plaque sur laquelle est fixée le fauteuil roulant réel, la plaque étant pivotable autour d'un point fixe.

Des caractéristiques ou des modes de réalisation particuliers utilisables seuls ou en combinaison sont :
- la plaque pivote autour d'une rotule portée par un axe vertical ;
- les moyens de support comporte en outre une plaque inférieure fixe horizontale ayant deux axes horizontaux orthogonaux de laquelle sont fixées 4 poulies et deux moteurs rotatifs commandés par lesdits actionneurs, et deux câbles, chaque câble ayant ses extrémités fixées à la plaque pivotante, passant par les deux poulies se trouvant sur un même axe et étant entrainé par un des moteurs de telle sorte que la rotation d'un moteur entraîne une inclinaison correspondante de la plaque pivotante ;
- le calculateur est adapté pour intégrer la physique du fauteuil roulant dans la simulation ;
- le calculateur gère pour le fauteuil roulant virtuel, le différentiel de déplacement entre ses roues motrices, les collisions et glissement avec les obstacles de l'environnement virtuel et sa dynamique de déplacement ;
- les capteurs et actionneurs comportent deux rouleaux parallèles portant une roue motrice du fauteuil roulant réel, un desdits rouleaux étant motorisés de telle sorte qu'il transmet à la roue portée du fauteuil roulant une force de rotation adaptée pour simuler l'environnement virtuel ;
- la vitesse de rotation d'un des rouleaux est transmise au calculateur pour adapter la vitesse du fauteuil roulant virtuel.

L'invention sera mieux comprise à la lecture de la description qui suit, faite uniquement à titre d'exemple, et en référence aux figures en annexe dans lesquelles :
- la figure 1 est une vue schématique d'un simulateur de parcours en fauteuil roulant selon un mode de réalisation de l'invention ;
- la figure 2 est une vue en perspective de la plateforme du simulateur de la figure 1 ;
- la figure 3 est une vue selon la coupe AA de la plateforme de la figure 2 ;
- la figure 4 est une vue détaillée des jeux de rouleaux de la plateforme de la figure 2 ;
- la figure 5 est une vue schématique des fonctions du simulateur de la figure 1 ; et
- les figures 6A et 6B sont des vues schématiques d'une variante de réalisation de la plateforme de la figure 2.

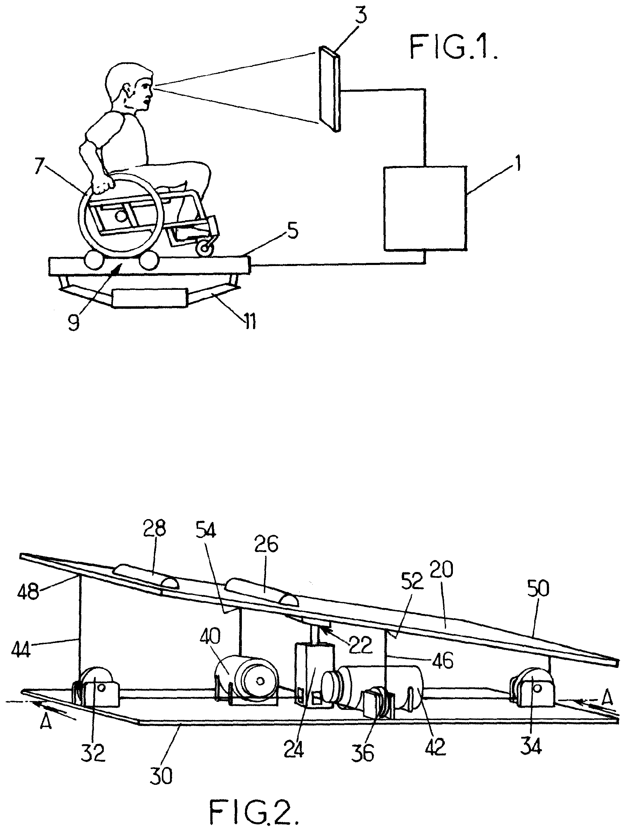

En référence à la figure 1, un simulateur de parcours en fauteuil roulant comprend un calculateur 1 relié à un système de visualisation 3.

Une plateforme 5 supporte un fauteuil roulant 7.

Cette plateforme 5 comporte des capteurs 9 associés au fauteuil roulant 7 permettant d'acquérir les ordres de déplacement de l'utilisateur. Elle comporte également des actionneurs 11 permettant de déplacer en inclinaison la plateforme 5.

Le calculateur comporte des moyens de calcul suffisamment puissant pour pouvoir simuler en temps réel le déplacement du fauteuil dans un environnement virtuel. Il comprend, par exemple, des unités de calcul graphique capables d'exécuter de nombreuses opérations sur les images en parallèle telles qu'il en existe actuellement dans les consoles de jeu.

Le système de visualisation 3 est constitué d'un simple écran, type écran LCD, dans les configurations les plus simples. Pour permettre une meilleure immersion, le système de visualisation est de type multi écrans ou écran panoramique partant de la base de la plateforme pour permettre à l'utilisateur, assis dans le fauteuil, d'anticiper les obstacles simulés sur le sol.

La plateforme 5 est constituée, figure 2, d'une plaque mobile 20 pivotante autour d'une rotule 22 supportée par un axe vertical 24.

La plaque pivotante 20 comporte deux jeux de rouleaux 26, 28 pouvant recevoir les roues motrices du fauteuil roulant.

Une plaque inférieure fixe 30 repose sur le sol. Cette plaque est rectangulaire et comporte sur ses deux axes médians 4 poulies 32, 34, 36 et 38 et deux moteurs rotatifs 40 et 42. Deux câbles 44, 46 ont leurs extrémités 48, 50, 52, 54 fixées à la plaque pivotante 20 et passent par les poulies se trouvant sur un même axe médian.

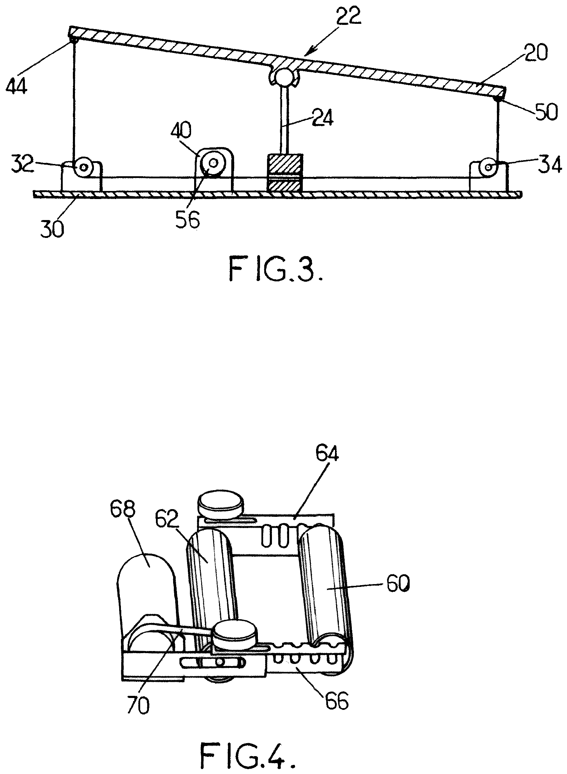

La figure 3 représente une vue en coupe de la plateforme 5 selon un des axes. Le câble 44 forme des spires sur l'axe d'entrainement 56 du moteur 40. Ainsi la rotation du moteur se traduit par un déplacement sensiblement vertical et en sens opposé des deux extrémités 48, 50 du câble ce qui entraine une rotation de la plaque pivotante 20 autour de la rotule 22.

Les deux câbles étant disposés dans des plans orthogonaux, une coordination des commandes des deux moteurs 40, 42 permet de faire pivoter la plaque pivotante 20 selon les axes de tangage et de roulis avec des angles compris entre +150 et -15°.

La figure 4 est une vue en perspective d'un des jeux de rouleaux 26, 28. Il comporte deux rouleaux parallèles 60, 62 montées sur deux glissières 64, 66 permettant de régler leur écartement. Un moteur électrique 68 entraine un des rouleaux par l'intermédiaire d'une courroie 70. Le moteur comporte un codeur, non représenté.

Le jeu de rouleau a une double fonction. Avec le codeur, il sert de capteur du déplacement en rotation de la roue du fauteuil roulant et, avec le moteur, il entraine la rotation de la roue du fauteuil roulant ou il génère une résistance à sa rotation permettant à l'utilisateur d'avoir un retour de force correspondant à l'environnement d'évolution virtuel.

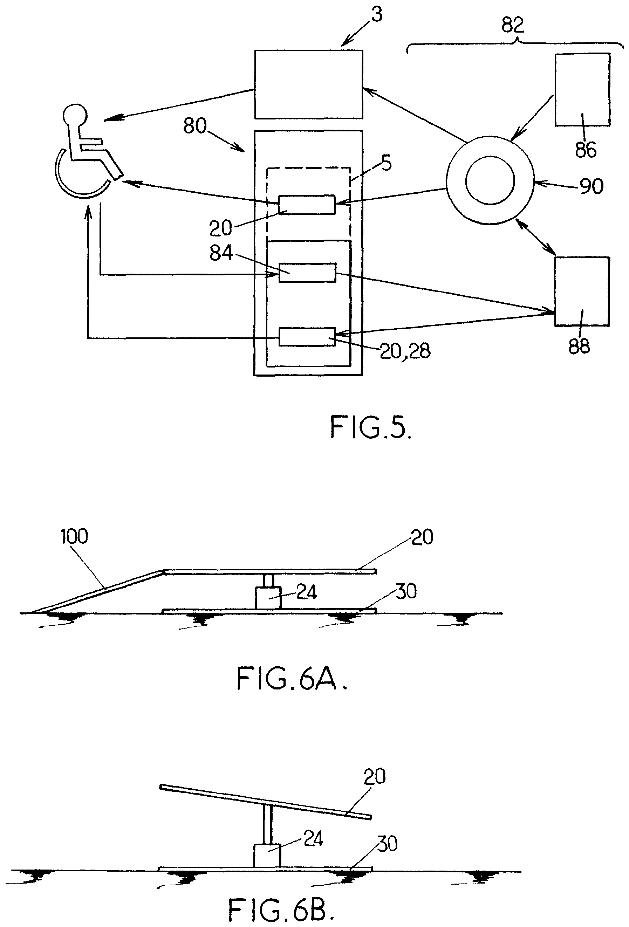

Fonctionnellement, le simulateur comporte, figure 5, trois grandes parties :
- les composants de visualisation 3 de type écran. Ils peuvent être constitués d'un simple écran à cristaux liquides ou, mieux, d'un écran panoramique incurvé permettant une bonne immersion dans la scène virtuelle.
- les interfaces 80 avec l'utilisateur et son fauteuil roulant ; et
- le simulateur 82 proprement dit permettant l'évolution dans l'environnement virtuel.

Les interfaces 80 comprennent la plateforme mobile 5. Celle-ci a deux fonctions, la plaque pivotante 20 qui s'adresse à la perception vestibulaire et les jeux de rouleaux motorisés 26, 28 qui s'adressent à la perception du retour d'effort.

Elles comprennent également, dans l'autre sens, les capteurs 84 de rotation des roues pour fournir au simulateur les actions de déplacement par la poussée des mains sur les roues motrices du fauteuil roulant.

Le logiciel de simulation 82 comporte des bibliothèques 86 de modules environnementaux grâce auxquelles il est possible de construire des environnements virtuels, par exemple sous forme de script.

Il comporte également un module de physique du fauteuil roulant 88 qui, en fonction des caractéristiques physiques du fauteuil roulant réel, des ordres de déplacement reçus via les capteurs 84 et de l'environnement va calculer le comportement que doit avoir le fauteuil roulant virtuel pour que celui-ci soit conforme au comportement du fauteuil roulant physique dans un environnement physique similaire.

Le moteur de simulation 90 intègre les données fournies par le module de physique 88 avec les données d'environnement pour projeter une vue subjective correspondante et modifier l'inclinaison de la plateforme.

Dans une variante, l'axe vertical 24 supportant la plaque pivotante 20 est constitué d'un vérin permettant à la plateforme d'avoir une position de chargement, figure 6A, abaissée qui, avec l'ajout d'un plan incliné 100 permet de faire monter ou descendre un fauteuil roulant de la plateforme et une position de travail, figure 6B, plus élevée pour permettre une plus grande amplitude des inclinaisons.

Le système a une architecture modulaire et configurable. Par exemple, il peut avoir une première configuration basique constituée par un environnement 3D sur un PC portable avec des personnages, fauteuils, etc. pilotés avec le clavier et la souris.

Sur cette configuration, un ajout d'un joystick pour le pilotage et/ou une « spacemouse » permet une navigation plus facile dans la scène 3D.

Puis l'ajout d'un système de visualisation plus immersif comme un écran panoramique ou un casque de visualisation améliorera le réalisme de la simulation.

Ce réalisme sera encore amélioré par la plateforme à rouleaux à retour d'effort pour gérer les déplacements du fauteuil et la simulation physique du déplacement de celui-ci.

La modification de la plateforme en une plateforme dynamique de gestion des inclinaisons du fauteuil permet d'améliorer l'immersion en introduisant les sensations vestibulaires.

Enfin, l'ajout d'un système de suivi des mouvements des bras et de la tête pour gérer les zones de préemption permet un contrôle complet de tous les éléments de gestion de déplacement du fauteuil.

L'invention a été illustrée et décrite en détail dans les dessins et la description précédente. Celle-ci doit être considérée comme illustrative et donnée à titre d'exemple et non comme limitant l'invention a cette seule description. De nombreuses variantes de réalisation sont possibles.

Par exemple, les ordres de déplacement du fauteuil roulant peuvent être transmis, dans le cas d'un fauteuil roulant électrique, directement par une connexion sur le joystick de commande du fauteuil. Dans le cadre d'une version simplifiée du simulateur, les ordres sont transmis par une interface clavier-souris classique.

De même la plaque mobile comporte un dispositif de fixation du fauteuil roulant afin qu'il ne se déplace pas lors des inclinaisons de la plaque.

Dans les revendications, le mot « comprenant » n'exclue pas d'autres éléments et l'article indéfini « un/une » n'exclue pas une pluralité.

## Revendications

1. Appareil de simulation de parcours en fauteuil roulant comportant :
• un calculateur (1) adapté pour simuler l'évolution d'un fauteuil roulant virtuel dans un environnement virtuel ;
• des moyens de visualisation (3) adaptés pour visualiser ladite évolution ;
• des moyens de support (5) d'un fauteuil roulant réel comportant
• une plaque (20) sur laquelle est fixé ledit fauteuil roulant réel, ladite plaque étant pivotable autour d'un point fixe (22),
• des capteurs (9) associés au fauteuil roulant réel adaptés pour transmettre au calculateur des informations d'ordres de déplacement du fauteuil roulant réel, le calculateur adaptant l'évolution du fauteuil roulant virtuel en fonction des informations d'ordres de déplacement reçues,
**caractérisé en ce que** lesdits moyens de support comportent en outre:
• une plaque inférieure fixe horizontale ayant deux axes horizontaux orthogonaux de laquelle sont fixées quatre poulies, deux moteurs rotatifs et deux câbles, chaque câble ayant ses extrémités fixées à la plaque pivotante (20), passant par les deux poulies se trouvant sur un même axe et étant entrainé par un des moteurs de telle sorte que la rotation d'un moteur entraîne une inclinaison correspondante de la plaque pivotante (20),
• des actionneurs (11) adaptés pour commander lesdits deux moteurs rotatifs afin de déplacer en inclinaison lesdits moyens de support en fonction d'ordres émis par le calculateur, entraînant une inclinaison correspondante de la plaque pivotante (20), de telle sorte que l'inclinaison desdits moyens de support soit conforme à l'environnement d'évolution du fauteuil roulant virtuel.

2. Appareil selon la revendication 1, **caractérisé en ce que** ladite plaque pivote autour d'une rotule portée par un axe vertical.

3. Appareil selon l'une quelconque des revendications précédentes, **caractérisé en ce que** le calculateur est adapté pour intégrer la physique du fauteuil roulant dans la simulation.

4. Appareil selon la revendication 3, **caractérisé en ce que** le calculateur gère pour le fauteuil roulant virtuel, le différentiel de déplacement entre ses roues motrices, les collisions et glissement avec les obstacles de l'environnement virtuel et sa dynamique de déplacement.

5. Appareil selon l'une quelconque des revendications précédentes, **caractérisé en ce que** les capteurs et actionneurs comportent deux rouleaux parallèles portant une roue motrice du fauteuil roulant réel, un desdits rouleaux étant motorisés de telle sorte qu'il transmet à la roue portée du fauteuil roulant une force de rotation adaptée pour simuler l'environnement virtuel.

6. Appareil selon la revendication 5, **caractérisé en ce que** la vitesse de rotation d'un des rouleaux est transmise au calculateur pour adapter la vitesse du fauteuil roulant virtuel.

## Patentansprüche

1. Fahrsimulationsvorrichtung für einen Rollstuhl, umfassend:
• einen Rechner (1), der geeignet ist, die Fortbewegung eines virtuellen Rollstuhls in einer virtuellen Umgebung zu simulieren;
• Visualisierungsmittel (3), die geeignet sind, die Fortbewegung zu visualisieren;
• Mittel zum Halten (5) eines echten Rollstuhls, umfassend
• eine Platte (20), auf der der echte Rollstuhl befestigt ist, wobei die Platte um einen Festpunkt (22) schwenkbar ist,
• Sensoren (9), die mit dem echten Rollstuhl verbunden sind, die geeignet sind, Informationen zu Bewegungsbefehlen des echten Rollstuhls an den Rechner zu übertragen, wobei der Rechner die Fortbewegung des virtuellen Rollstuhls in Abhängigkeit von den empfangenen Informationen zu Bewegungsbefehlen anpasst, **dadurch gekennzeichnet, dass** die Mittel zum Halten ferner Folgendes umfassen:
• eine feste, horizontale untere Platte, die zwei orthogonale horizontale Achsen, zwei Drehmotoren und zwei Seile aufweist und an welcher vier Rollen befestigt sind, wobei jedes Seil mit seinen Enden an der Schwenkplatte (20) befestigt ist, jedes Seil die zwei Rollen durchläuft, die sich auf einer selben Achse befinden, und von einem der Motoren derart angetrieben wird, dass die Drehung eines Motors zu einer entsprechenden Neigung der Schwenkplatte (20) führt,
• Betätigungselemente (11), die geeignet sind, die zwei Drehmotoren zu steuern, um die Mittel zum Halten in Abhängigkeit von Befehlen, die von dem Rechner gesendet werden, in Neigebewegung zu versetzen, eine entsprechende Neigung der Schwenkplatte (20) bewirkend, damit die Neigung der Mittel zum Halten der Fortbewegungsumgebung des virtuellen Rollstuhls entspricht.

2. Vorrichtung nach Anspruch 1, **dadurch gekennzeichnet, dass** die Platte um ein Kugelgelenk schwenkt, das von einer vertikalen Achse getragen wird.

3. Vorrichtung nach einem der vorhergehenden Ansprüche, **dadurch gekennzeichnet, dass** der Rechner geeignet ist, die Physik des Rollstuhls in die Simulation zu integrieren.

4. Vorrichtung nach Anspruch 3, **dadurch gekennzeichnet, dass** der Rechner für den virtuellen Rollstuhl die Bewegungsabweichung zwischen dessen Antriebsrädern, die Kollisionen und den Schlupf mit den Hindernissen der virtuellen Umgebung und dessen Bewegungsdynamik steuert.

5. Vorrichtung nach einem der vorhergehenden Ansprüche, **dadurch gekennzeichnet, dass** die Sensoren und Betätigungselemente zwei parallele Walzen umfassen, die ein Antriebsrad des echten Rollstuhls tragen, wobei eine der Walzen derart angetrieben ist, dass sie an das getragene Rad des Rollstuhls eine Drehkraft überträgt, die geeignet ist, die virtuelle Umgebung zu simulieren.

6. Vorrichtung nach Anspruch 5, **dadurch gekennzeichnet, dass** die Drehgeschwindigkeit einer der Walzen an den Rechner übertragen wird, um die Geschwindigkeit des virtuellen Rollstuhls anzupassen.

## Claims

1. A device for simulating a wheelchair journey including:
• a computer (1) adapted to simulate the evolution of a virtual wheelchair in a virtual environment;
• display means (3) adapted to display said evolution;
• support means (5) for a real wheelchair including:
• a plate (20) on which said real wheelchair is fixed, said plate being able to pivot around a fixed point (22),
• sensors (9) associated with the real wheelchair adapted to transmit to the computer movement command information for the real wheelchair, the computer adapting the evolution of the virtual wheelchair depending on the movement command information received,
**characterized in that** said support means further include:
• a fixed horizontal lower plate having two horizontal axes to which four pulleys are orthogonally fixed, two rotary engines and two cables, each cable having its ends fixed to the pivoting plate (20), passing through the two pulleys placed on the same axis and being driven by one of the engines such that the engine rotation causes a corresponding inclination of the pivoting plate (20),
• actuators (11) adapted to control said two rotary engines so as to move in inclination said support means depending on commands emitted by the computer, causing a corresponding inclination of the pivoting plate (20), such that the inclination of said support means is in accordance with the evolution environment of the virtual wheelchair.

2. The device according to Claim 1, **characterized in that** said plate pivots around a ball pivot held by a vertical axis.

3. The device according to any of the previous claims, **characterized in that** the computer is adapted to integrate the physical configuration of the wheelchair in the simulation.

4. The device according to Claim 3, **characterized in that** the computer manages for the virtual wheelchair, the movement differential between its drive wheels, the collisions and sliding with obstacles in the virtual environment and its movement dynamics.

5. The device according to any of the previous claims, **characterized in that** the sensors and actuators include two parallel rollers holding a motor wheel of the real wheelchair, one of said rollers being motorized such that it transmits to the held wheel of the wheelchair a rotation force adapted to simulate the virtual environment.

6. The device according to Claim 5, **characterized in that** the rotational speed of one of the rollers is transmitted to the computer to adapt the speed of the virtual wheelchair.
